(19) Europäisches Patentamt
European Patent Office
Office européen des brevets

(11) **EP 3 644 094 B1**

(12) **EUROPÄISCHE PATENTSCHRIFT**

(45) Veröffentlichungstag und Bekanntmachung des Hinweises auf die Patenterteilung:
**18.11.2020   Patentblatt 2020/47**

(51) Int Cl.:
**G01S 17/894** *(2020.01)*    **G01S 7/4914** *(2020.01)*
**G01S 17/58** *(2006.01)*    **G01S 17/36** *(2006.01)*

(21) Anmeldenummer: **19200317.6**

(22) Anmeldetag: **30.09.2019**

(54) **3D-LICHTLAUFZEITKAMERA UND VERFAHREN ZUR ERFASSUNG DREIDIMENSIONALER BILDDATEN**

3D TIME OF FLIGHT CAMERA AND METHOD FOR RECORDING THREE-DIMENSIONAL IMAGE DATA

CAMÉRA TEMPS DE VOL 3D ET PROCÉDÉ DE DÉTECTION DE DONNÉES D'IMAGE TRIDIMENSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2018   DE 102018126841**

(43) Veröffentlichungstag der Anmeldung:
**29.04.2020   Patentblatt 2020/18**

(73) Patentinhaber: **SICK AG**
**79183 Waldkirch (DE)**

(72) Erfinder: **Gimpel, Dr. Hartmut**
**78467 Konstanz (DE)**

(56) Entgegenhaltungen:
**WO-A1-2017/025885**

• **KOMAZAWA A ET AL: "A time-of-flight range image sensor using high-speed 4-tap lock-in pixels", PROCEEDINGS OF SPIE; [PROCEEDINGS OF SPIE ISSN 0277-786X VOLUME 10524], SPIE, US, Bd. 10328, 20. Februar 2017 (2017-02-20), Seiten 1032806-1032806, XP060083046, DOI: 10.1117/12.2270543 ISBN: 978-1-5106-1533-5**
• **HAN SANG-MAN ET AL: "A Time-of-Flight Range Image Sensor With Background Canceling Lock-in Pixels Based on Lateral Electric Field Charge Modulation", IEEE JOURNAL OF THE ELECTRON DEVICES SOCIETY, IEEE, USA, Bd. 3, Nr. 3, 1. Mai 2015 (2015-05-01), Seiten 267-275, XP011579294, DOI: 10.1109/JEDS.2014.2382689 [gefunden am 2015-04-22]**

**Beschreibung**

Die Erfindung betrifft eine 3D-Lichtlaufzeitkamera und ein Verfahren zur Erfassung dreidimensionaler Bilddaten aus einem Erfassungsbereich nach dem Oberbegriff von Anspruch 1 beziehungsweise 14.

Im Gegensatz zu einer herkömmlichen Kamera nimmt eine 3D-Kamera auch eine Tiefeninformation auf und erzeugt somit dreidimensionale Bilddaten mit Abstands- oder Entfernungswerten für die einzelnen Pixel des 3D-Bildes, das auch als Entfernungsbild oder Tiefenkarte bezeichnet wird. Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben zu lösen.

In der Automatisierungstechnik beispielsweise können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden.

Bei Fahrzeugen, die auf öffentlichen Straßen oder in abgeschlossener Umgebung speziell im Bereich der Fabrik- und Logistikautomatik verkehren, soll mit einer 3D-Kamera die gesamte Umgebung und insbesondere ein geplanter Fahrweg möglichst vollständig und dreidimensional erfasst werden. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle) oder Flurförderzeuge. Die Bilddaten werden genutzt, um die autonome Navigation zu ermöglichen oder einen Fahrer zu unterstützen, unter anderem um Hindernisse zu erkennen, Kollisionen zu vermeiden oder das Be- und Entladen von Transportgütern einschließlich Kartons, Paletten, Containern oder Anhängern zu erleichtern.

In der Sicherheitstechnik erfasst die 3D-Kamera Personen in der Umgebung einer Gefahrenstelle, beispielsweise einer Maschine oder speziell eines Roboters. Bei Erkennung eines unzulässigen Eingriffs in ein Schutzvolumen oder Unterschreiten eines Sicherheitsabstands zu der Maschine erfolgt eine sicherheitsgerichtete Reaktion, um einen Unfall zu vermeiden.

Zur Ermittlung der Tiefeninformationen sind verschiedene Verfahren bekannt, wie Lichtlaufzeitmessungen oder Stereoskopie. In dieser Beschreibung wird die Lichtlaufzeitmessung (TOF, Time of Flight oder Lidar, Light Detection and Ranging) betrachtet. Das ist auch das Messprinzip eines Laserscanners, der mit seinem Abtaststrahl mittels Drehspiegel oder drehendem Messkopf eine Szenerie abtastet. Für eine 3D-Erfassung ohne derartige bewegliche Teile wird auch der Begriff Solid State Lidar verwendet.

Für die Lichtlaufzeitmessung wird eine Szene mit amplitudenmoduliertem Licht ausgeleuchtet. Die Kamera misst für jeden ihrer Bildpunkte die Laufzeit anhand des Phasenversatzes zwischen ausgesandtem und wieder empfangenen Lichts. Dabei gibt es auch empfangsseitig eine Art Modulation, die sich aus der Abtastung ergibt.

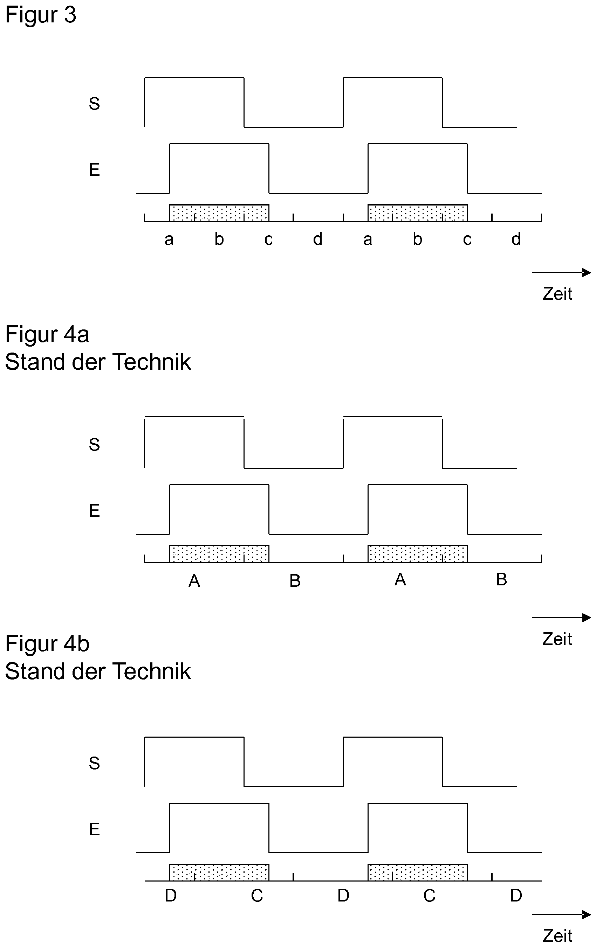

Figur 4a zeigt ein herkömmliches Modulationsschema. Oben ist mit S das Sendelicht dargestellt, das mit einer Frequenz $f_s$ periodisch moduliert wird. Das zurückkehrende Empfangslicht darunter ist mit E bezeichnet und weist je nach Abstand des Objekts, an dem das Sendelicht zurückgeworfen wurde, einen Phasenversatz zum Sendelicht S auf. Unten sind Zeitabschnitte gezeigt, die Ladungsspeichern des jeweiligen Pixels der Kamera zugewiesen sind, in denen die innerhalb des jeweiligen Zeitabschnitts erzeugten Photoelektronen gespeichert werden. Die Zeitabschnitte müssen nicht wie gezeigt bündig mit dem Sendelicht gewählt sein, aber ein etwaiger Zeitversatz sollte berücksichtigt werden, da sich sonst ein Messfehler der Phase und damit des Abstands ergibt.

In Figur 4a gibt es zwei verschiedene Ladungsspeicher A und B an jedem Pixel, zwischen denen mit der Modulationsfrequenz $f_s$ des Sendelichts hin- und her geschaltet wird. Es wird über eine Vielzahl von Modulationsperioden hinweg integriert, d.h. die auflaufenden Ladungsträger werden aufsummiert, und erst dann wird die Gesamtladung aus den Pixeln ausgelesen, wobei Figur 4a zwei solche Modulationsperioden zeigt. Die gesuchte Phase ergibt sich aus B/(A+B). Ein Nachteil dieser einfachen Messung ist die Empfindlichkeit gegenüber Fremd- oder Hintergrundlicht.

Die EP 3 159 711 A1 offenbart ein System, das mit diesem Verfahren Abstände zu einem Objekt misst. Dabei wird nicht flächig beleuchtet, sondern eine Vielzahl von Einzellasern beleuchtet jeweils einzelne Empfangspixel, um eine größere Reichweite zu erzielen. Hintergrundlicht wird entweder mit Hilfe umgebender Pixel oder durch einen weiteren Belichtungszyklus ohne moduliertes Sendelicht gemessen und dann in der Auswertung abgezogen. In der EP 3 301 479 A1 wird diese digitale Hintergrundkompensation bereits analog durch teilweise Entladung noch vor der Digitalisierung ersetzt. Dazu werden die während der Lichtlaufzeitmessung in einem ersten Belichtungszyklus akkumulierten Ladungen der Pixel in einem zweiten Belichtungszyklus ohne moduliertes Sendelicht partiell je nach vorhandenem Hintergrundlicht wieder entladen.

In einer preisgünstigen Umsetzung weisen die Pixel nur einen Ladungsspeicher auf, der mit der Modulationsfrequenz ein- und ausgeschaltet wird. Die beiden Messungen gemäß Figur 4a mit Ladungsspeichern A und B werden hintereinander durchgeführt. Im zeitlichen Mittel fällt so aber die Hälfte des Nutzlichts auf ein inaktives Pixel und geht verloren, mit entsprechend verschlechtertem Signal-Rauschverhältnis und damit verringerter Reichweite.

Robuster gegenüber Hintergrundlicht und Pegelunterschieden ist ein erweitertes Modulationsschema, das gemeinsam in den Figuren 4a und 4b dargestellt ist. Nach der Messung gemäß Figur 4a werden die Werte A und B ausgelesen, und es folgt eine weitere Messung gemäß Figur 4b, in dem die Zeitabschnitte, nach denen jeweils zwischen den beiden Ladungsspeichern hin- und hergeschaltet wird, um 1/4 der Periode der Modulationsfrequenz $f_s$ verschoben ist. Um die so gewonnenen Messwerte zu unterscheiden, sind sie mit C und D bezeichnet. Die gesuchte Phase ergibt sich nun aus arctan((C-D)/(A-B)).

Derartige Messverfahren zur Abstandsmessung sind auch unter dem Begriff homodyn bekannt, da die sende- und empfangsseitige Modulationsfrequenz dieselbe ist. Eine einführende Diskussion der beiden anhand Figur 4a und 4b vorgestellten Verfahren findet sich beispielsweise in der Arbeit von Li, Larry, "Time-of-flight camera - an introduction", Technical white paper SLOA190B (2014).

Mit einer 3D-Lichtlaufzeitkamera kann nicht nur der Abstand, sondern über die Dopplerverschiebung der Modulationsfrequenz $f_s$ auch die Geschwindigkeit eines Objekts in der Radialrichtung gemessen werden, also entlang des Messlichtstrahls. Das wird beispielsweise in der Arbeit von Heide, Felix, et al. "Doppler time-of-flight imaging", ACM Transactions on Graphics (ToG) 34.4 (2015): 36 und der zugehörigen WO 2017/025885 A1 beschrieben. Dazu werden die Empfangspixel mit einer anderen Frequenz moduliert als das Sendelicht, und deshalb wird dieses Verfahren auch als heterodyn bezeichnet. Durch geschickte Wahl der beiden Modulationsfrequenzen kann erreicht werden, dass die Empfangspixel die Dopplerfrequenz messen, während die beiden Modulationsfrequenzen einander über die Integrationszeit auslöschen beziehungsweise nur eine Konstante ergeben.

Um aber mit einer 3D-Lichtlaufzeitkamera sowohl einen Abstandswert als auch einen Geschwindigkeitswert zu erhalten, müssen beide Messungen hintereinander durchgeführt werden. Das dauert nicht nur doppelt so lange, sondern bei gegebener Messdauer steht auch nur die Hälfte des Nutzlichts für die einzelne Messung zur Verfügung, mit der Folge eines verschlechterten Signal-Rauschverhältnisses und damit verringerter Reichweite. Ein weiterer herkömmlicher Vorschlag ist, einige Pixel auf dem Bildsensor der Kamera nur Abstände messen zu lassen und andere Pixel nur Geschwindigkeiten. Damit geht trotzdem ein entsprechender Anteil des Empfangslichts für die jeweilige einzelne Messung verloren, und zudem verringert sich die Bildauflösung. Beide Messungen können auch zeitgleich erfolgen, indem zwei Systeme parallel betrieben werden, aber dadurch verdoppeln sich Kosten und Platzbedarf.

Die US 4 818 100 A1 offenbart eine Messung von Lichtlaufzeit und Dopplerverschiebung mit zwei Laserquellen und drei Lichtdetektoren. Dabei werden zwar optische Elemente mehrfach verwendet, im Prinzip handelt es sich aber um zwei Messsysteme.

Aus der US 7 202 941 B2 ist eine weitere Vorrichtung zum Messen von Abstand und Geschwindigkeit bekannt. Es wird aber innerhalb einer Messung nur eine der Größen bestimmt. Dabei soll die Abtastrate langsamer sein als die Modulationsfrequenz, während 3D-Lichtlaufzeitkameras mit empfangsseitig gleicher oder schnellerer Modulation arbeiten.

Die US 7 576 839 B2 zeigt ein weiteres Distanz- und Geschwindigkeitsmesssystem, das auf einem mechanischen Shutter zur Modulation beruht. Der Shutter ersetzt die Umschaltung zwischen Ladungsspeichern in den Empfangspixeln. Erneut werden innerhalb einer Messung nur entweder Abstand oder Geschwindigkeit gemessen.

Die EP 2 477 043 A1 zeigt eine weitere 3D-Lichtlaufzeitkamera, deren Pixel mindestens zwei Erfassungseinheiten aufweisen. Damit werden aber keine Geschwindigkeiten gemessen.

In der WO 2003/054579 A1 wird ein Verfahren zum Erzeugen von 3D-Entfernungsbildern beschrieben, bei dem das jeweilige Messintervall durch eine Anzahl von Speichern in mehrere Teilintervalle zerlegt wird. Ein weiterer Speicher dient dazu, innerhalb eines zweiten Zeitintervalls vor dem Aussenden eines Lichtpulses das Störlicht zu messen, um das 3D-Entfernungsbild entsprechend zu kompensieren. Auch hier werden nur Abstände, nicht jedoch Geschwindigkeiten gemessen.

In der Arbeit von Büttgen, Bernhard et al. "CCD/CMOS lock-in pixel for range imaging: Challenges, limitations and state-of-the-art", 1st range imaging research day (2005): 21-32 werden Pixel vorgestellt, bei denen das Umpolen einer Spannung dafür sorgt, dass die erzeugten Photoelektronen wahlweise nach rechts oder links gezogen werden. Das wird wiederum nur im Rahmen von Abstandsmessungen diskutiert, es werden keine Geschwindigkeiten bestimmt.

Aus der Arbeit von Komazawa, A., et al. "A time-of-flight range image sensor using high-speed 4-tap lock-in pixels." Selected Papers from the 31st International Congress on High-Speed Imaging and Photonics. Vol. 10328. International Society for Optics and Photonics, 2017, XP060083046, ist ein Bildsensor für eine Lichtlaufzeitmessung bekannt, dessen Pixel einen sogenannten LEFM (lateral electric field charge modulator) mit vier Ausgängen aufweisen. Damit kann ein Pixel vierfach zeitversetzt integrieren.

Han, Sang-Man, et al. "A time-of-flight range image sensor with background canceling lock-in pixels based on lateral electric field charge modulation." IEEE Journal of the Electron Devices Society 3.3 (2014): 267-275, XP011579294, beschreibt Hochgeschwindigkeits-Lock-In-Pixel mit einem Mehrfach-Tap-Modulator und Hintergrundunterdrückung.

Es ist daher Aufgabe der Erfindung, die Abstands- und Geschwindigkeitsmessung einer 3D-Lichtlaufzeitkamera zu verbessern.

Diese Aufgabe wird durch eine 3D-Lichtlaufzeitkamera und ein Verfahren zur Erfassung dreidimensionaler Bilddaten aus einem Erfassungsbereich nach Anspruch 1 beziehungsweise 14 gelöst. Eine Beleuchtungseinheit beleuchtet den Erfassungsbereich mit Sendelicht, dessen Amplitude periodisch mit einer Frequenz $f_s$ moduliert wird. Das von Objekten im Erfassungsbereich zurückgeworfene Sendelicht fällt überlagert mit Fremd- oder Hintergrundlicht auf einen Bildsensor mit einer Vielzahl von Empfangspixeln, die daraus ein jeweiliges Empfangssignal erzeugen. Eine Auswertungseinheit, die zumindest teilweise in oder bei den Empfangspixeln implementiert sein kann, wertet diese Empfangssignale aus, um je Empfangspixel eine Phasenverschiebung zwischen Sende- und Empfangslicht und damit einen Abstandswert sowie eine Dopplerverschiebung des Empfangslichts gegenüber der Frequenz $f_s$ und damit einen Geschwindigkeitswert zu gewinnen.

Die Erfindung geht von dem Grundgedanken aus, Abstand und Geschwindigkeit mit demselben Empfangspixel gleichzeitig zu messen. Es entsteht mit derselben Messung sowohl eine Tiefenkarte als auch eine Geschwindigkeitskarte, d.h. zweidimensionale Bilder, deren Bildpunkte einen Abstand beziehungsweise eine Geschwindigkeit enthalten. Gleichzeitige Messung bedeutet, dass die von Empfangslicht erzeugten Photoelektronen sowohl zu der Abstandsmessung als auch zu der Geschwindigkeitsmessung beitragen. Es wird also nicht wie herkömmlich zweimal nacheinander gemessen, mit jeweils einer ersten Messung für den Abstand und einer zweiten Messung für die Geschwindigkeit. Eine Messung von Abstand und Geschwindigkeit mit demselben Empfangspixel heißt, dass es auch nicht wie in anderen herkömmlichen Lösungen manche Empfangspixel gibt, die der Abstandsmessung, und andere Empfangspixel, die der Geschwindigkeitsmessung zugewiesen sind, sei es auf demselben Bildsensor oder in zwei parallel betriebenen Systemen. Erfindungsgemäß misst ein und dasselbe Empfangspixel aufgrund derselben registrierten Ladungsträger sowohl Abstand als auch Geschwindigkeit.

Die Erfindung hat den Vorteil, dass eine 3D-Lichtlaufzeitkamera entsteht, die gleichzeitig auch Geschwindigkeiten misst. Da die Messungen gleichzeitig im selben Empfangspixel erfolgen, trägt jedes detektierte Photon voll zu beiden Messgrößen bei. Damit verlängert sich die Messzeit gegenüber einer herkömmlichen sequentiellen oder abwechselnden Messung der beiden Größen nicht, oder anders ausgedrückt verdoppelt sich die Messgeschwindigkeit. Alternativ zu kürzeren Messzyklen kann die gewonnene Messgeschwindigkeit genutzt werden, um das Signal-Rauschverhältnis und damit die Reichweite zu verbessern.

Die Empfangspixel weisen bevorzugt jeweils vier Ladungsspeicher auf. Das ermöglicht, die aus dem Empfangslicht erzeugten Photoelektronen vier verschiedenen Werten zuzuordnen, aus denen dann Abstand und Geschwindigkeit berechnet werden. Die Ladungsspeicher sind beispielsweise als Kondensatoren ausgebildet.

Die Ladungsspeicher nehmen vorzugsweise reihum nacheinander die in dem Empfangspixel erzeugten Ladungsträger auf. Dazu werden die Empfangspixel von der Auswertungseinheit entsprechend angesteuert.

Die Ladungsspeicher nehmen vorzugsweise jeweils nacheinander über ein Viertel der Periode der Frequenz $f_s$ die in dem Empfangspixel erzeugten Ladungsträger auf. Somit werden in jeder Periode $1/f_s$ vier Samplingpunkte der Modulation des Empfangslichts gewonnen.

Die Auswertungseinheit ist bevorzugt dafür ausgebildet, aus den vier Ladungsspeichern jeweils einen der Werte a, b, c und d auszulesen. Die Information aus den Ladungsspeichern steht damit für die weitere vorzugsweise digitale Verarbeitung zur Verfügung. Die zugewiesenen Namen a, b, c und d der Ladungsspeicher und der daraus ausgelesenen Werte sind natürlich austauschbar, es ist jede beliebige Repräsentation in der Auswertungseinheit denkbar.

Die Auswertungseinheit ist bevorzugt dafür ausgebildet, den Abstand aus der Phase $\varphi=B/(B+A)$ zu bestimmen, mit $A:=a+b$ und $B:=c+d$. Das ist eine sehr einfache Auswertung, die im Prinzip auch mit nur zwei alternierend aktiven Ladungsspeichern bei Umschaltung nach einer halben Periode $1/f_s$ auskommen würde. Sie ist wenig robust gegenüber Hintergrundlicht und Pegel. Es ist möglich, den Hintergrund in einer weiteren Messung zu bestimmen und von A und B abzuziehen. Die Phase lässt sich über einen Faktor $\frac{cc}{4f_s}$ in einen Abstand umrechnen. Hierbei bezeichnet das Formelzeichen cc die Lichtgeschwindigkeit. Eine äquivalente Berechnung über $(1-A)/(B+A)$ ist ebenso möglich.

Die Auswertungseinheit ist alternativ dafür ausgebildet, den Abstand aus der Phase $\varphi=\arctan((C-D)/(A-B))$ zu bestimmen, mit $A:=a+b$, $B:=c+d$, $C:=b+c$ und $D:=a+d$. Durch zyklische Vertauschung der Variablen a, b, c und d sind bei etwaigem Vorzeichenwechsel äquivalente Berechnungen möglich, die mit umfasst sind. Diese Auswertung nutzt die gewonnenen Werte a, b, c und d besser aus und ist auch ohne Hintergrundmesszyklus deutlich robuster im Hinblick auf Fremdlicht und Pegelabhängigkeit des Abstandswerts. Bei der Umrechnung der Phase in einen Abstand ist wegen der Einheit des arctan ein zusätzliche Faktor $\pi$ zu beachten.

Die Auswertungseinheit ist bevorzugt dafür ausgebildet, durch Bilden von Summen $M:=a+c$ und/oder $N:=b+d$ eine heterodyne Messung durchzuführen und damit die Geschwindigkeit aus einer Dopplerverschiebung zu bestimmen. Das Aufaddieren der jeweils alternierend aktiven Ladungsspeicher a, c und b, d entspricht effektiv einer Messung bei doppelter empfangsseitiger Modulationsfrequenz $2f_s$. Es handelt sich folglich, da sich die Modulationsfrequenzen sendeseitig und empfangsseitig unterscheiden, um eine heterodyne Messung. Physikalisch bleibt es dieselbe Messung, mit der auch der Abstand bestimmt wird. Nun lässt sich mit Hilfe von M und/oder N auch zugleich die Dopplerverschiebung und damit die Geschwindigkeit messen.

Die Auswertungseinheit ist bevorzugt dafür ausgebildet, die Dopplerverschiebung zu $\Delta f = M/A \cdot f_s$ zu bestimmen, mit $A := a+b$. In dieser Formel bleibt noch eine Konstante unberücksichtigt, die von Pulsdauer und Hintergrund abhängt und die beispielsweise durch Abziehen oder Kalibration eliminiert wird. Erneut sind zyklische Vertauschungen in den Variablen a, b, c und d mit umfasst, insbesondere eine äquivalente Berechnung mit M und $B := c+d$. Ähnlich der Abstandsberechnung nur über A und B ist auch diese Bestimmung der Dopplerverschiebung empfindlich gegenüber Hintergrund und Pegel, wobei eine zusätzliche Hintergrundmessung und Korrektur denkbar ist.

Die Auswertungseinheit ist bevorzugt dafür ausgebildet, die Dopplerverschiebung zu $\Delta f = (M-N)/(A-B) \cdot f_s$ zu bestimmen, mit $A := a+b$ und $B := c+d$, wobei auch diese Formel zyklische Vertauschungen eventuell mit Vorzeichenwechsel mit umfassen soll. Diese Berechnung ist robuster, da sie Hintergrund und Pegel zumindest teilweise in sich kompensiert.

Die Auswertungseinheit ist bevorzugt dafür ausgebildet, die Werte a, b, c und d nach Integration über eine Vielzahl von Perioden der Frequenz $f_s$ auszulesen. Dadurch wird Nutzlicht über eine längere Zeit gesammelt und so ein genaueres Messergebnis erzielt. Die Integration erfolgt vorzugsweise über eine Integrationsdauer, die einem ganzzahligen Vielfachen der Periode $1/f_s$ entspricht.

Die Auswertungseinheit ist bevorzugt dafür ausgebildet, die mit mehreren Empfangspixeln gemessene Geschwindigkeiten miteinander zu verrechnen. Das kann eine Durchschnittsbildung sein und zu einer Geschwindigkeitskarte mit reduzierter Auflösung führen (Downsampling), oder es werden Glättungsfilter mit Filterkernen unterschiedlicher Gewichtungen der jeweiligen Nachbarn angewandt. Die Verrechnung erfolgt deshalb vorzugsweise auf der Geschwindigkeitskarte, weil die Dopplermessung deutlich ungenauer ist als die Abstandsmessung. Daher kann es vorteilhaft sein, laterale Auflösung in X- und Y-Richtung zugunsten einer besseren Geschwindigkeitsbestimmung zu opfern. Die Abstandsmessung ist auch schon in ihren einzelnen Bildpunkten genauer, dennoch ist natürlich auch möglich, die Tiefenkarte entsprechenden Filterungen oder Anpassungen zu unterziehen, beispielsweise um besser vergleichbare Tiefen- und Geschwindigkeitskarten zu erhalten.

Die Empfangspixel sind bevorzugt dafür ausgebildet, Ladungsträger durch Anlegen einer Spannung in eine bestimmte Richtung abzuziehen, in welcher ein bestimmter Ladungsspeicher angeordnet ist. Das ist eine besondere Auslegung der Empfangspixel, welche die Verteilung der Ladungsträger auf die richtigen Ladungsspeicher auch bei höheren Modulationsfrequenzen und damit kurzen Umschaltzeiten verbessert.

Die Empfangspixel weisen bevorzugt 2n Ladungsspeicher mit n>2 auf, die reihum nacheinander die in dem Empfangspixel erzeugten Ladungsträger aufnehmen, insbesondere für jeweils 1/2n der Periode der Frequenz $f_s$. Die herkömmliche Messung mit zwei Ladungsspeichern wäre der Fall n=1, die bisher betrachteten Ausführungsformen mit vier Ladungsspeichern entsprechen n=2. Für n>2 wird also die Erfindung verallgemeinert. Es entstehen dann komplexere Empfangspixel, dafür kann die Auswertung auf eine feinere Information über den Intensitätsverlauf des Empfangslichts zurückgreifen.

Die Empfangspixel weisen vorzugsweise einen zusätzlichen Ladungsspeicher zur Bestimmung von Fremdlicht auf. Der zusätzliche Ladungsspeicher dient nicht der eigentlichen Abstands- oder Geschwindigkeitsmessung, sondern sammelt in Zeitintervallen ohne Nutzlicht sämtliche Ladungsträger, um den Hintergrund zu vermessen, mit dem dann die Auswertung kompensiert wird. Bei Ausführungsformen mit vier Ladungsspeichern für die Werte a, b, c und wird somit ein fünfter Ladungsspeicher hinzugefügt, in der Terminologie des vorigen Absatzes ist es ein 2n+1-ter Ladungsspeicher.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   eine schematische Blockdarstellung einer 3D-Lichtlaufzeitkamera;

Fig. 2   eine Draufsicht auf die Empfangspixel einer 3D-Lichtlaufzeitkamera;

Fig. 3   eine Darstellung eines Modulationsschemas für Empfangspixel nach Figur 2, um simultan Abstand und Geschwindigkeit zu messen;

Fig. 4a   eine Darstellung eines herkömmlichen Modulationsschemas zur Abstandsmessung; und

Fig. 4b   eine Figur 4a ergänzende Darstellung für ein erweitertes herkömmliches Modulationsschema zur Abstandsmessung.

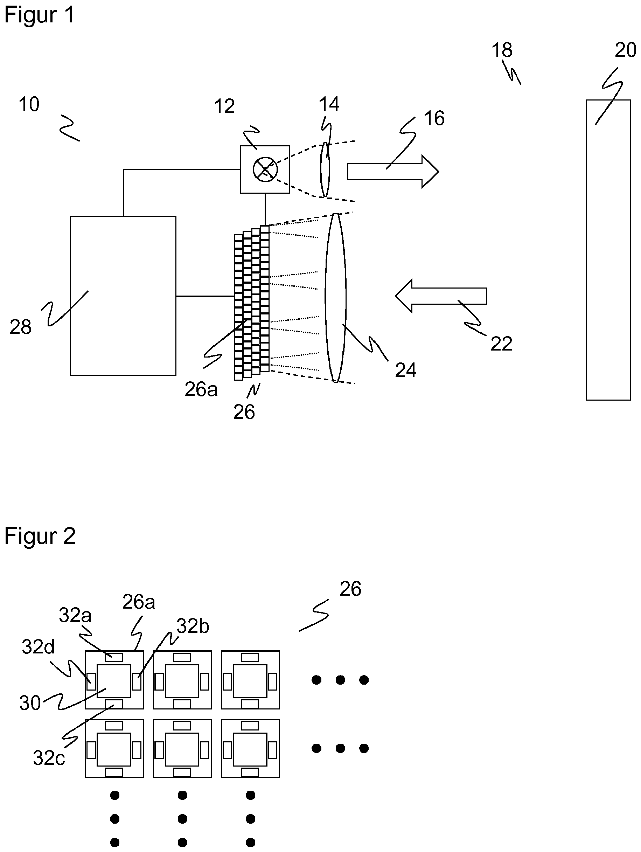

Figur 1 zeigt eine schematische Blockdarstellung einer 3D-Lichtlaufzeitkamera 10. Eine Beleuchtungseinheit 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Das Sendelicht 16 kann im sichtbaren Wellenlängenbereich, im Nahinfrarotbereich beispielsweise mit 805 nm oder 905 nm, im mittleren Infrarotbereich beispielsweise mit 1550 nm oder bei anderen Wellenlängen erzeugt werden.

Der Lichtsender 12 ist derart ansteuerbar, dass die Amplitude des Sendelichts 16 mit einer Frequenz $f_s$

moduliert wird, wobei $f_s$ typischerweise im Bereich von 1 MHz bis 1000 MHz liegt. Die Modulation ist beispielsweise sinus- oder rechteckförmig, jedenfalls eine periodische Modulation. Durch die Frequenz $f_s$ entsteht ein begrenzter Eindeutigkeitsbereich der Abstandsmessung, so dass für große Reichweiten der 3D-Lichtlaufzeitkamera 10 kleine Modulationsfrequenzen $f_s$ erforderlich sind. Alternativ werden Messungen bei zwei oder mehr Modulationsfrequenzen durchgeführt, um in Kombination der Messungen den Eindeutigkeitsbereich zu vergrößern.

Trifft das Sendelicht 16 in dem Erfassungsbereich 18 auf ein Objekt 20, so wird ein Teil als Empfangslicht 22 zu der 3D-Lichtlaufzeitkamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix angeordneten Lichtdetektoren oder Empfangspixeln 26a auf. Die Auflösung des Bildsensors 26 kann von zwei oder einigen bis hin zu tausenden oder Millionen Empfangspixeln 26a reichen. Prinzipiell ist auch eine Ausbildung der 3D-Lichtlaufzeitkamera als einfacher oder scannender optischer Taster mit nur einem Empfangspixel oder einer linearen beziehungsweise Zeilenanordnung von Empfangspixeln vorstellbar.

Die Empfangspixel 26a detektieren in ihren später noch diskutierten Ladungsspeichern während einer Messdauer oder Integrationszeit T das Empfangslicht 22, wobei die Integrationszeit T vorzugsweise ein ganzzahliges Vielfaches der Periode $1/f_s$ der Modulationsfrequenz ist. Dann werden die in den Ladungsspeichern aufgesammelten Ladungsmengen ausgelesen, digitalisiert und an eine Auswertungseinheit 28 übergeben. Diese Auswertung wird im Anschluss unter Bezugnahme auf die Figuren 2 und 3 genauer erläutert.

Die klare Auftrennung der Figur 1 in einen Bildsensor 26 und eine Auswertungseinheit 28 ist auch praktisch möglich, dient aber zunächst der verständlichen Erläuterung. Zumindest ein Teil der Funktionalität der Auswertungseinheit kann in die Empfangspixel 26a oder in den Bildsensor 26 integriert sein.

Die dargestellte Beleuchtung ist eine Flächenbeleuchtung, wozu beispielsweise ein Diffusor als Teil der Sendeoptik 14 eingesetzt wird. In einer anderen Ausführungsform wird eine Anordnung zahlreicher Einzellichtquellen des Lichtsenders 12 scharf in den Erfassungsbereich 18 projiziert, so dass im Ergebnis die Empfangspixel 26a einzeln beleuchtet werden und die Reichweite sich erhöht. Weiterhin kann die Beleuchtung abweichend von der Darstellung nicht in die 3D-Lichtlaufzeitkamera 10 integriert, sondern davon baulich beziehungsweise räumlich getrennt werden. Denkbar sind auch mehrere Beleuchtungen an unterschiedlichen Orten, um damit andere Geschwindigkeitskomponenten des Objekts 20 zu messen.

Figur 2 zeigt eine Draufsicht auf einen Ausschnitt der Empfangspixel 26a des Bildsensors 26. Diese Ansicht ist rein funktional und schematisch, der konkrete Halbleiteraufbau des Bildsensors 26 ist nicht Gegenstand dieser Beschreibung. Die Empfangspixel 26a weisen jeweils eine lichtempfindliche Fläche 30 und vier getrennt auslesbare Ladungsspeicher 32a-d auf, beispielsweise Kondensatoren. Damit können vier unterschiedliche Abschnitte des Intensitätsverlaufs des Empfangslichts 22 erfasst werden. Vorzugsweise nehmen die Ladungsspeicher 32a-d reihum nacheinander, insbesondere jeweils gleich lang, die im Empfangspixel 26a erzeugten Photoelektronen beziehungsweise Ladungsträger auf. Das wiederholt sich nach einer Periode $1/f_s$, so dass jeder der vier Ladungsspeicher 32a-d in jeder Periode $1/f_s$ genau einmal an die Reihe kommt.

Die Anordnung der Ladungsspeicher 32a-d an den vier Kanten der lichtempfindlichen Fläche 30 ist nur beispielhaft. Allerdings ist gerade diese geometrische Anordnung vorteilhaft für einen besonderen Aufbau der Empfangspixel 26a, die in Erweiterung der einleitend zitierten Arbeit von Büttgen et al. durch Anlegen einer Spannung die Ladungsträger jeweils in eine bestimmte Richtung zu einem bestimmten Ladungsspeicher 32a-d ziehen.

Durch die vier Ladungsspeicher 32a-d muss übrigens gegenüber herkömmlichen Lösungen mit nur zwei Ladungsspeichern kein zusätzlicher Flächenbedarf entstehen. Das liegt daran, dass die Ladungsspeicher 32a-d bei den noch vorzustellenden Modulationsschemata nur halb so oft aktiv sind und daher auch nur die halbe Kapazität und damit Fläche benötigen.

Figur 3 illustriert ein Modulationsschema, das mit Empfangspixeln 26a mit vier Ladungsspeichern 32a-d realisiert werden kann. Wie schon in den einleitend diskutierten Figuren 4a und 4b zeigt auch die Figur 3 oben zunächst den Intensitätsverlauf des Sendelichts 16 mit Modulationsfrequenz $f_s$. Darunter ist der durch den Lichtweg zum Objekt 20 und zurück phasenverzögerte Intensitätsverlauf des Empfangslichts 22 dargestellt. Unten sind Zeitabschnitte gezeigt, die den Ladungsspeichern 32a-d des jeweiligen Einzelpixels 26a zugewiesen sind und in denen folglich die innerhalb des jeweiligen Zeitabschnitts durch Empfangslicht 22 erzeugten Photoelektronen gespeichert werden. Das Modulationsschema wird über eine Vielzahl k von Perioden $1/f_s$ wiederholt, von denen zwei gezeigt sind, so dass sich eine Integrationszeit $T=k/f_s$ ergibt.

Nach Ablauf der Integrationszeit werden die aufintegrierten Ladungsmengen a, b, c und d aus den vier Ladungsspeichern 32a-d ausgelesen und stehen somit der Auswertungseinheit 28 für die Bestimmung von Abstand und Geschwindigkeit des Objekts 20 zur Verfügung. Dabei zeigt Figur 3 einen Fall mit Geschwindigkeit v=0. Bei einer endlichen Geschwindigkeit v>0 des Objekts 20 ergibt sich zusätzlich eine Dopplerverschiebung der Modulationsfrequenz im Empfangssignal.

Die Auswertungseinheit 28 berechnet nun für jedes Empfangspixel 26a einen Abstand und eine Geschwindigkeit, genauer die Radialgeschwindigkeit in Ausbreitungsrichtung des Sendelichts 16, und damit insgesamt eine Tiefenkarte und eine Geschwindigkeitskarte aus derselben Messung. Für diese Auswertungen können verschiedene Summen der Werte a, b, c und d gebildet werden, wobei nicht in jeder Ausführungsform alle diese Summen benötigt werden:

A:=a+b
B:=c+d
C:=b+c
D:=a+d
M:=a+c
N:=b+d

In einer ersten Variante wird der Abstand aus A und B berechnet. Die Phase $\varphi$ lässt sich bestimmen zu $\varphi/\pi = B/(A + B)$, und damit ist der gesuchte Abstand dist gegeben durch

$$dist = \frac{cc}{4f_S} \frac{B}{A+B} = \frac{c}{4f_S} \frac{c+d}{a+b+c+d}.$$

Die Bestimmung ist ganz äquivalent auch über (1-A)/(A+B) möglich. Bei dieser Berechnung wird Hintergrundlicht, also nicht moduliertes Gleichlicht, nicht kompensiert. Es ist denkbar, das Hintergrundlicht in einem separaten Messzyklus ohne Sendelicht 16 zu messen und abzuziehen. Sei h das Hintergrundlicht aus einem Zeitraum entsprechend den Werten a, b, c oder d, so ergibt sich ein kompensierter Abstandswert

$$dist = \frac{cc}{4f_S} \frac{c+d-2h}{a+b+c+d-4h}.$$

In einer zweiten Variante wird der Hintergrund aus der Messung von a, b, c und d selbst kompensiert. Dazu wird nun die Phase als $\varphi = \arctan((C - D/(A - B))$ bestimmt, und daraus ergibt sich der Abstand

$$dist = \frac{cc}{4\pi f_S} \arctan\left(\frac{C-D}{A-B}\right) = \arctan\left(\frac{b+c-a-d}{a+b-c-d}\right).$$

Die Phase $\varphi$ unterscheidet sich von der ersten Berechnung auch in ihrer Einheit, daher erscheint in der Formel ein zusätzliche Faktor $1/\pi$. Mit der zweiten Berechnungsart werden die Messwerte a, b, c, d besser ausgenutzt, es erfolgt ein automatischer Abzug des Hintergrundlichts. Unter zyklischen Vertauschungen wie (a,b,c,d) > (b,c,d,a) ergibt sich bis auf Vorzeichen derselbe Abstandswert.

Für die Geschwindigkeitsmessung erläutert die einleitend zitierte Arbeit von Heide et al., dass die sendeseitige Modulationsfrequenz $f_S$ und die empfangsseitige Modulationsfrequenz geeignet gewählt werden können, so dass sie bei Integration über die Integrationszeit T=k/$f_S$ orthogonal sind, sich also effektiv zu Null beziehungsweise zu einem konstanten Wert summieren, der vom Objektabstand unabhängig ist. Tatsächlich ergibt sich nicht Null, sondern ein konstanter Wert, weil die Amplitude von Licht wegen dessen unipolarer Natur nicht negativ werden kann.

Mit den vorgestellten vier Ladungsspeichern 32a-d und dem Modulationsschema der Figur 3 ist effektiv die sendeseitige Modulationsfrequenz $f_S$ und die empfangsseitige Modulationsfrequenz 2$f_S$ und damit diese Orthogonalitätsbedingung gewahrt. Allgemein ausgedrückt wird sowohl homodyn als auch heterodyn gemessen, indem Werte a, b, c, d einmal benachbart beispielsweise zu A und B und einmal überkreuz oder alternierend beispielsweise zu M und N zusammengefasst werden. Damit wird über eine physikalisch identische Messung zugleich eine Abstands- und Geschwindigkeitsmessung ermöglicht.

Es kann also auf Basis derselben Ausgangsgrößen a, b, c und d beziehungsweise der daraus gebildeten Summen auch die Dopplerfrequenz bestimmt und damit eine Geschwindigkeit berechnet werden. Dazu wird das Verhältnis r aus heterodyner zu homodyner Abtastung betrachtet, das mit der Dopplerverschiebung $\Delta f$ über $r = \frac{\Delta f}{2f_S - f_S} = \frac{\Delta f}{f_S}$ zusammenhängt. Das Verhältnis r wiederum kann auf mehrere Weisen aus den vorliegenden Messwerten a, b, c und d berechnet werden.

Eine Möglichkeit der Berechnung ist $r = M/A = (a + c)/(a + b)$. Daraus ergibt sich dann eine Dopplerverschiebung

$$\Delta f = \frac{M}{A} f_S = \frac{a+c}{a+b} f_S.$$

Es wurde schon angesprochen, dass sich noch ein konstanter Term ergibt, weil sich die orthogonalen Moduationsfrequenzen nicht zu Null, sondern zu einem Offset aufintegrieren. Dieser konstante Term ist in der obigen Formel noch abzuziehen oder zu kalibrieren, aber dies hängt von der Pulsdauer und dem Hintergrundlicht ab, nicht von Objektentfernung oder Objektgeschwindigkeit. Aus der Dopplerverschiebung $\Delta f$ ergibt sich der gesuchte Radialanteil v der Objektgeschwindigkeit zu

$$v = \Delta f \frac{cc}{f_S}.$$

Ähnlich der ersten Berechnungsmethode für den Abstand auf Basis nur von A und B ist auch die erste Berechnungsmethode für die Geschwindigkeit noch nicht hintergrundkompensiert, und es ist denkbar, in einem separaten Messzyklus das Hintergrundlicht h zu bestimmen und von den Werten a, b, c und d abzuziehen. Die Wahl von M und A statt einer beispielsweise von N ausgehenden Berechnung ist beispielhaft, die Berechnung ist bei zyklischer Vertauschung in a, b, c und d äquivalent.

In Analogie zu der zweiten Berechnungsmethode des Abstands ist auch für die Geschwindigkeitsmessung eine automatische Berücksichtigung von Hintergrundlicht in einer zweiten Berechnungsmethode möglich. Dazu werden nicht nur M und A, sondern alle Werte a, b, c und d ausgenutzt, nämlich mit $r = 1/2\ (M - N)/(A - B) = 1/2\ (a - b + c - d)/(a + b - c - d)$ und folglich

$$\Delta f = \frac{M-N}{A-B} f_s = \frac{a-b+c-d}{a+b-c-d} f_s.$$

Wiederum muss ein konstanter Term abgezogen werden, und erneut sind zyklische Vertauschungen in a, b, c und d denkbar.

Um ein Gefühl für die Größenordnungen zu bekommen, wird noch ein Zahlenbeispiel angegeben. Das Objekt 20 bewegt sich mit einer angenommenen Radialgeschwindigkeit von v=10 m/s auf die 3D-Lichtlaufzeitkamera 10 zu oder von ihr fort. Bei einer Modulationsfrequenz $f_s$=100 MHz ergibt sich eine Dopplerfrequenz $f_{s,d}=f_s(1-v/cc)$ und damit eine Dopplerverschiebung $\Delta f$=3,3 Hz. Bei einer 3D-Lichtlaufzeitkamera sind sehr lange Integrationszeiten T üblich, etwa T=100 ms für eine Bildwiederholrate von 10 Frames/s. Das ermöglicht, solche Geschwindigkeiten tatsächlich zu messen.

Dennoch ist das Signal-Rauschverhältnis der Geschwindigkeitsmessung deutlich schlechter als dasjenige der Abstandsmessung. Es kann daher sinnvoll sein, die Ergebnisse der Geschwindigkeitsberechnung über mehrere benachbarte Pixel zu mitteln oder sonstige Filter einzusetzen, um den Rauschpegel in den Griff zu bekommen. Eine entsprechende Filterung der Abstandsmessung ist nicht erforderlich, aber denkbar, um besser vergleichbare Tiefen- und Geschwindigkeitskarten zu erhalten.

Zusammenfassend gelingt es durch die Erfindung, mehrere Messungen zugleich durchzuführen. Je nach Zählweise sind das zwei Messungen, nämlich Abstand und Geschwindigkeit, genaugenommen aber sogar drei Messungen. Denn für eine herkömmliche Bestimmung des Abstands werden auch schon zwei Messungen benötigt, wie einleitend anhand der Figuren 4a und 4b erläutert, um zuerst A und B und danach C und D zu bestimmen. Hinzu kommt eine dritte heterodyne Messung, hier konkret zur Bestimmung von M und N. Erfindungsgemäß können alle diese Messungen durch die vier Ladungsspeicher 32a-d beispielsweise mit dem Modulationsschema der Figur 3 auf einmal durchgeführt werden. Die erforderliche Umschaltung zwischen den mehreren Ladungsspeichern 32a-d ist bei moderaten Modulationsfrequenzen im MHz-Bereich bis hinunter in die Größenordnung $f_s$=1 MHz technisch auch umsetzbar.

Es ist denkbar, noch weitere Ladungsspeicher vorzusehen, so dass es dann insgesamt 2n, n>2 Ladungsspeicher je Empfangspixel 26a gibt. Das ermöglicht dann noch feinere Abtastungen und weitere Verbesserungen der Abstands- und Geschwindigkeitsmessung insbesondere mit Berücksichtigung von Hintergrundlicht.

Auch können noch weitere Messgrößen erfasst werden. Ein Beispiel einer weiteren Messgröße, die allerdings auch schon mit vier Ladungsspeichern 32a-d erfasst werden kann, ist ein Wert für die Objekt-Remission oder Albedo.

Eine weitere Möglichkeit, um das Hintergrundlicht insbesondere bei starker Fremdlichtbelastung zu messen und zu kompensieren, ist ein zusätzlicher Ladungsspeicher in den jeweiligen Empfangspixeln 26a, der nur Gleichlicht ohne moduliertes Sendelicht 16 sammelt. Dieser Ladungsspeicher ist dann der fünfte Ladungsspeicher zusätzlich zu den vier Ladungsspeichern 32a-d, oder allgemein ein 2n+1ter Ladungsspeicher. Alternativ wird der Hintergrund schon während der laufenden Messung von den jeweils angesammelten Ladungen abgezogen.

Es kann sinnvoll sein, die Messwerte zu kalibrieren. Dazu zählt nicht nur die Bestimmung des oben angesprochenen konstanten Terms bei der Geschwindigkeitsmessung. Die Abstandswerte können insbesondere temperaturabhängige Anteile durch interne Signallaufzeiten enthalten oder noch von der Objektremission abhängen, und solche Effekte sind durch Kalibration oder Referenzmessung kompensierbar. Entsprechende Korrekturen des Geschwindigkeitswerts beispielsweise für unterschiedliche Objektabstände oder auch für unterschiedliche Objektremissionen sind möglich. Es ist vorstellbar, dass die Empfangspixel 26a eine logarithmische Empfindlichkeitskurve aufweisen.

**Patentansprüche**

1. 3D-Lichtlaufzeitkamera (10) zur Erfassung dreidimensionaler Bilddaten aus einem Erfassungsbereich (18), die eine Beleuchtungseinheit (12) zum Erzeugen von Sendelicht (16), das periodisch mit einer Frequenz $f_s$ moduliert ist, einen Bildsensor (26) mit einer Vielzahl von Empfangspixeln (26a) zum Erzeugen eines jeweiligen Empfangssignals und eine Auswertungseinheit (28) aufweist, um mittels der Empfangssignale einen Abstand und eine Geschwindigkeit zu messen, wobei die Auswertungseinheit separat oder zumindest teilweise in die Empfangspixel integriert ist,
**dadurch gekennzeichnet,**
**dass** Empfangspixel (26a) und Auswertungseinheit (28) für eine gleichzeitige Messung von Abstand und Geschwindigkeit mit demselben Empfangspixel (26a) ausgebildet sind, indem dasselbe Empfangspixel aufgrund derselben registrierten Ladungsträger in mindestens vier Ladungsspeichern (32a-d) in einer sowohl homodynen als auch heterodynen Messung in einer physikalisch identischen Messung sowohl den Abstand aus einer Phasenverschiebung als auch die Geschwindigkeit aus einer Dopplerverschiebung misst.

**2.** 3D-Lichtlaufzeitkamera (10) nach Anspruch 1, wobei die Empfangspixel (26a) jeweils vier Ladungsspeicher (32a-d) aufweisen.

**3.** 3D-Lichtlaufzeitkamera (10) nach Anspruch 2, wobei die Ladungsspeicher (32a-d) reihum nacheinander die in dem Empfangspixel (26a) erzeugten Ladungsträger aufnehmen.

**4.** 3D-Lichtlaufzeitkamera (10) nach Anspruch 2 oder 3, wobei die Ladungsspeicher (32a-d) jeweils nacheinander über ein Viertel der Periode der Frequenz $f_s$ die in dem Empfangspixel (26a) erzeugten Ladungsträger aufnehmen.

**5.** 3D-Lichtlaufzeitkamera (10) nach einem der Ansprüche 2 bis 4, wobei die Auswertungseinheit (28) dafür ausgebildet ist, aus den vier Ladungsspeichern (32a-d) jeweils einen Wert a, b, c und d auszulesen.

**6.** 3D-Lichtlaufzeitkamera (10) nach Anspruch 5, wobei die Auswertungseinheit (28) dafür ausgebildet ist, den Abstand aus der Phase $\varphi=B/(B+A)$, mit A:=a+b und B:=c+d, oder aus der Phase $\varphi=\arctan((CD)/(A-B))$ zu bestimmen, mit A:=a+b, B:=c+d, C:=b+c und D:=a+d.

**7.** 3D-Lichtlaufzeitkamera (10) nach Anspruch 5 oder 6, wobei die Auswertungseinheit (28) dafür ausgebildet ist, durch Bilden von Summen M:=a+c und/oder N:=b+d eine heterodyne Messung durchzuführen und damit die Geschwindigkeit aus einer Dopplerverschiebung zu bestimmen.

**8.** 3D-Lichtlaufzeitkamera (10) nach Anspruch 7, wobei die Auswertungseinheit (28) dafür ausgebildet ist, die Dopplerverschiebung zu $\Delta f=M/A*f_s$, mit A:=a+b, oder zu $\Delta f=(M-N)/(A-B)*f_s$ zu bestimmen, mit A:=a+b und B:=c+d.

**9.** 3D-Lichtlaufzeitkamera (10) nach einem der vorhergehenden Ansprüche,. wobei die Auswertungseinheit (28) dafür ausgebildet ist, die Werte a, b, c und d nach Integration über eine Vielzahl von Perioden der Frequenz $f_s$ auszulesen.

**10.** 3D-Lichtlaufzeitkamera (10) nach einem der vorhergehenden Ansprüche,. wobei die Auswertungseinheit (28) dafür ausgebildet ist, die mit mehreren Empfangspixeln (26a) gemessene Geschwindigkeiten miteinander zu verrechnen.

**11.** 3D-Lichtlaufzeitkamera (10) nach einem der vorhergehenden Ansprüche,.

wobei die Empfangspixel (26a) dafür ausgebildet sind, Ladungsträger durch Anlegen einer Spannung in eine bestimmte Richtung abzuziehen, in welcher ein bestimmter Ladungsspeicher (32a-d) angeordnet ist.

**12.** 3D-Lichtlaufzeitkamera (10) nach einem der vorhergehenden Ansprüche,. wobei die Empfangspixel (26a) 2n Ladungsspeicher mit n>2 aufweisen, die reihum nacheinander die in dem Empfangspixel (26a) erzeugten Ladungsträger aufnehmen, insbesondere für jeweils 1/2n der Periode der Frequenz $f_s$.

**13.** 3D-Lichtlaufzeitkamera (10) nach einem der vorhergehenden Ansprüche,. wobei die Empfangspixel (26a) einen zusätzlichen Ladungsspeicher zu Bestimmung von Fremdlicht aufweisen.

**14.** Verfahren zur Erfassung dreidimensionaler Bilddaten aus einem Erfassungsbereich (18), wobei periodisch mit einer Frequenz $f_s$ moduliertes Sendelicht (16) in den Erfassungsbereich (18) ausgesandt wird, Empfangslicht (22) aus dem Erfassungsbereich (18) mit einer Vielzahl von Empfangspixeln (26a) erfasst wird und mittels der Empfangssignale der Empfangspixel (26a) ein Abstand und eine Geschwindigkeit gemessen wird,
**dadurch gekennzeichnet,**
**dass** Abstand und Geschwindigkeit gleichzeitig mit demselben Empfangspixel (26a) gemessen werden, indem dasselbe Empfangspixel aufgrund derselben registrierten Ladungsträger in mindestens vier Ladungsspeichern (32a-d) in einer sowohl homodynen als auch heterodynen Messung in einer physikalisch identischen Messung sowohl den Abstand aus einer Phasenverschiebung als auch die Geschwindigkeit aus einer Dopplerverschiebung misst.

**Claims**

**1.** A 3D time-of-flight camera (10) for acquiring three-dimensional image data from a detection area (18), comprising an illumination unit (12) for generating transmitted light (16) periodically modulated with a frequency $f_s$, an image sensor (26) having a plurality of receiving pixels (26a) for generating a respective received signal, and an evaluation unit (28) for measuring a distance and a velocity based on the received signals, wherein the evaluation unit is separate or at least partially integrated into the receiving pixels, **characterized in that** receiving pixel (26a) and evaluation unit (28) are configured for a simultaneous measurement of distance and velocity by the same receiving pixel (26), that same receiving pixel measuring both the distance from a phase shift and the velocity from a Doppler shift on the basis of the same charge carriers registered in at least four charge stores (32a-d) in a physically identical measurement both homodyne and heterodyne.

2. The 3D time-of-flight camera (10) according to claim 1,
wherein the receiving pixels (26a) each have four charge stores (32a-d).

3. The 3D time-of-flight camera (10) according to claim 2,
wherein the charge stores (32a-d) sequentially receive the charge carriers generated in the receiving pixel (26a).

4. The 3D time-of-flight camera (10) according to claim 2 or 3,
wherein the charge stores (32a-d) each successively receive the charge carriers generated in the receiving pixel (26a) over a quarter of the period of the frequency $f_s$.

5. The 3D time-of-flight camera (10) according to any of claims 2 to 4,
wherein the evaluation unit (28) is configured to read a value a, b, c and d from the four charge stores (32a-d).

6. The 3D time-of-flight camera (10) according to claim 5,
wherein the evaluation unit (28) is configured to determine the distance from the phase $\varphi = B/(B+A)$, with $A:=a+b$ and $B:=c+d$, or from the phase $\varphi = \arctan((C-D)/(A-B))$, with $A:=a+b$, $B:=c+d$, $C:=b+c$ and $D:=a+d$.

7. The 3D time-of-flight camera (10) according to claim 5 or 6,
wherein the evaluation unit (28) is configured to perform a heterodyne measurement by forming sums $M:=a+c$ and/or $N:=b+d$ and thus to determine the velocity from a Doppler shift.

8. The 3D time-of-flight camera (10) according to claim 7,
wherein the evaluation unit (28) is configured to determine the Doppler shift as $\Delta f = M/A \cdot f_s$, with $A:=a+b$, or as $\Delta f = (M-N)/(A-B) \cdot f_s$, with $A:=a+b$ and $B:=c+d$.

9. The 3D time-of-flight camera (10) according to any of the preceding claims,.
wherein the evaluation unit (28) is configured to read out the values a, b, c and d after integration over a plurality of periods of the frequency $f_s$.

10. The 3D time-of-flight camera (10) according to any of the preceding claims,.
wherein the evaluation unit (28) is configured to combine the speeds measured with a plurality of receiving pixels (26a).

11. The 3D time-of-flight camera (10) according to one of the preceding claims,.
wherein the receiving pixels (26a) are configured to extract charge carriers by applying a voltage in a specific direction in which a specific charge store (32a-d) is arranged.

12. The 3D time-of-flight camera (10) according to any of the preceding claims,.
wherein the receiving pixels (26a) have 2n charge stores with n>2, which in turn successively receive the charge carriers generated in the receiving pixel (26a), in particular for 1/2n of the period of the frequency $f_s$ in each case.

13. The 3D time-of-flight camera (10) according to any of the preceding claims,.
wherein the receiving pixels (26a) have an additional charge store for determining extraneous light.

14. A method for acquiring three-dimensional image data from a detection area (18), wherein transmission light (16) periodically modulated with a frequency $f_s$ is transmitted into the detection area (18), receiving light (22) from the detection area (18) is detected with a plurality of receiving pixels (26a), and a distance and a speed are measured based on the received signals of the receiving pixels (26a),
**characterized in that** the distance and velocity are measured simultaneously with the same receiving pixel (26a), that same receiving pixel measuring both the distance from a phase shift and the velocity from a Doppler shift based on the same registered charge carriers in at least four charge stores (32a-d) in a physically identical measurement both homodyne and heterodyne.

**Revendications**

1. Caméra 3D à temps de vol (10) pour l'acquisition de données d'images tridimensionnelles provenant d'une zone de détection (18), comprenant une unité d'éclairage (12) pour générer une lumière d'émission (16) modulée périodiquement avec une fréquence $f_s$, un capteur d'images (26) ayant une multitude de pixels de réception (26a) pour générer un signal de réception respectif, et une unité d'évaluation (28), afin de mesurer une distance et une vitesse au moyen des signaux de réception, l'unité d'évaluation étant disposée séparément ou étant intégrée au moins partiellement dans les pixels de réception,
**caractérisée en ce que**
les pixels de réception (26a) et l'unité d'évaluation (28) sont réalisés pour mesurer simultanément la distance et la vitesse avec le même pixel de réception (26a), du fait que le même pixel de réception mesure aussi bien la distance à partir d'un décalage de phase que la vitesse à partir d'un décalage Doppler sur la base des mêmes porteurs de charge enregistrés dans au moins quatre accumulateurs de charge (32a - d) lors d'une mesure aussi bien homodyne que hétérodyne au sein d'une mesure physiquement identique.

2. Caméra 3D à temps de vol (10) selon la revendication 1,
dans laquelle les pixels de réception (26a) ont chacun quatre accumulateurs de charge (32a - d).

3. Caméra 3D à temps de vol (10) selon la revendication 2,
dans laquelle les accumulateurs de charge (32a - d) reçoivent successivement les porteurs de charge générés dans le pixel de réception (26a).

4. Caméra 3D à temps de vol (10) selon la revendication 2 ou 3,
dans laquelle les accumulateurs de charge (32a - d) reçoivent chacun successivement sur un quart de la période de la fréquence $f_s$ les porteurs de charge générés dans le pixel de réception (26a).

5. Caméra 3D à temps de vol (10) selon l'une des revendications 2 à 4, dans laquelle l'unité d'évaluation (28) est réalisée pour lire une valeur respective a, b, c et d dans les quatre accumulateurs de charge (32a - d).

6. Caméra 3D à temps de vol (10) selon la revendication 5,
dans laquelle l'unité d'évaluation (28) est réalisée pour déterminer la distance à partir de la phase $\varphi = B/(B+A)$, où $A := a+b$ et $B := c+d$, ou à partir de la phase $\phi = \arctan((CD)/(A-B))$, où $A := a+b$, $B := c+d$, $C := b+c$ et $D := a+d$.

7. Caméra 3D à temps de vol (10) selon la revendication 5 ou 6,
dans laquelle l'unité d'évaluation (28) est réalisée pour effectuer une mesure hétérodyne en formant des sommes $M := a+c$ et/ou $N := b+d$ et pour déterminer ainsi la vitesse à partir d'un décalage Doppler.

8. Caméra 3D à temps de vol (10) selon la revendication 7,
dans laquelle l'unité d'évaluation (28) est réalisée pour déterminer le décalage Doppler vers $\Delta f = M/A * f_s$, où $A := a+b$, ou vers $\Delta f = (M-N)/(A-B) * f_s$, où $A := a+b$ et $B := c+d$.

9. Caméra 3D à temps de vol (10) selon l'une des revendications précédentes,

dans laquelle l'unité d'évaluation (28) est réalisée pour lire les valeurs a, b, c et d après intégration sur une multitude de périodes de la fréquence $f_s$.

10. Caméra 3D à temps de vol (10) selon l'une des revendications précédentes,
dans laquelle l'unité d'évaluation (28) est réalisée pour compenser mutuellement les vitesses mesurées avec plusieurs pixels de réception (26a).

11. Caméra 3D à temps de vol (10) selon l'une des revendications précédentes,
dans laquelle les pixels de réception (26a) sont réalisés pour extraire des porteurs de charge en appliquant une tension dans une direction spécifique dans laquelle est disposé un accumulateur de charge spécifique (32a - d).

12. Caméra 3D à temps de vol (10) selon l'une des revendications précédentes,
dans laquelle les pixels de réception (26a) ont 2n accumulateurs de charge avec n>2, qui reçoivent successivement les porteurs de charge générés dans le pixel de réception (26a), en particulier respectivement pour 1/2n de la période de la fréquence $f_s$.

13. Caméra 3D à temps de vol (10) selon l'une des revendications précédentes,
dans laquelle les pixels de réception (26a) présentent un accumulateur de charge supplémentaire pour déterminer la lumière parasite.

14. Procédé d'acquisition de données d'images tridimensionnelles provenant d'une zone de détection (18), dans lequel une lumière d'émission (16) modulée périodiquement avec une fréquence $f_s$ est émise dans la zone de détection (18), une lumière de réception (22) provenant de la zone de détection (18) est détectée avec une multitude de pixels de réception (26a), et une distance et une vitesse sont mesurées au moyen des signaux de réception des pixels de réception (26a),
**caractérisé en ce que**
la distance et la vitesse sont mesurées simultanément avec le même pixel de réception (26a) du fait que le même pixel de réception mesure aussi bien la distance à partir d'un décalage de phase que la vitesse à partir d'un décalage Doppler sur la base des mêmes porteurs de charge enregistrés dans au moins quatre accumulateurs de charge (32a - d) lors d'une mesure aussi bien homodyne que hétérodyne au sein d'une mesure physiquement identique.

Figur 1

Figur 2

Figur 3

Figur 4a
Stand der Technik

Figur 4b
Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3159711 A1
- EP 3301479 A1
- WO 2017025885 A1
- US 4818100 A1
- US 7202941 B2
- US 7576839 B2
- EP 2477043 A1
- WO 2003054579 A1

**In der Beschreibung aufgeführte Nicht-Patentliteratur**

- **VON LI, LARRY.** Time-of-flight camera - an introduction. *Technical white paper SLOA190B,* 2014
- **VON HEIDE, FELIX et al.** Doppler time-of-flight imaging. *ACM Transactions on Graphics (ToG),* 2015, vol. 34.4, 36
- **VON BÜTTGEN, BERNHARD et al.** *CCD/CMOS lock-in pixel for range imaging: Challenges, limitations and state-of-the-art,* 2005, 21-32
- A time-of-flight range image sensor using high-speed 4-tap lock-in pixels. **VON KOMAZAWA, A. et al.** Selected Papers from the 31st International Congress on High-Speed Imaging and Photonics. International Society for Optics and Photonics, 2017, vol. 10328
- **HAN, SANG-MAN et al.** A time-of-flight range image sensor with background canceling lock-in pixels based on lateral electric field charge modulation. *IEEE Journal of the Electron Devices Society,* 2014, vol. 3.3, 267-275